# EUROPÄISCHE PATENTSCHRIFT

(11) **EP 3 236 427 B1**
(45) Veröffentlichungstag und Bekanntmachung des Hinweises auf die Patenterteilung: **29.12.2021**
(21) Anmeldenummer: 17163008.0
(22) Anmeldetag: 27.03.2017
(51) Int. Cl.: G07C 9/00

(54) **VERFAHREN UND SYSTEM ZUR PASSIVEN ZUGANGSKONTROLLE**
METHOD AND SYSTEM FOR PASSIVE ACCESS CONTROL
PROCÉDÉ ET SYSTÈME DE CONTRÔLE D'ACCÈS PASSIF

(30) Priorität: 19.04.2016 DE 102016206539
(43) Veröffentlichungstag der Anmeldung: 25.10.2017
(73) Patentinhaber: VOLKSWAGEN AKTIENGESELLSCHAFT, 38440 Wolfsburg (DE)
(72) Erfinder: Brückner, Claus-Peter, 38104 Braunschweig (DE)

(56) Entgegenhaltungen:
- EP-A2- 2 806 406
- WO-A1-00/12848
- US-A1- 2014 330 449
- Anonymous: "Ultra-wideband - Wikipedia", , 25. März 2016 (2016-03-25), XP055403417, Gefunden im Internet: URL:https://en.wikipedia.org/w/index.php?t itle=Ultra-wideband&oldid=711919137 [gefunden am 2017-09-04]

## Beschreibung

Die Erfindung betrifft ein Verfahren zur passiven Zugangskontrolle und ein passives Zugangssystem.

Funktionen eines mobilen Kommunikationsgeräts, wie z. B. eines Smart Phone, werden zunehmend in Funktionen eines Kraftfahrzeuges integriert. Beispielsweise wird ein Smart Phone, welches eine NFC-Schnittstelle aufweist, als ein Kraftfahrzeugschlüssel verwendet.

Dabei stellen sich sowohl Probleme hinsichtlich des Komforts als auch der Sicherheit, zum Beispiel bei der Abwehr von Relais-Angriffen, auch Relay Station Attacken (RSA) genannt, für virtuelle Fahrzeugschlüssel in Mobilgeräten.

Bekannte Lösungen zur Nutzung vom Mobiltelefonen als Fahrzeugschlüssel erfordern, dass das Mobiltelefon in die Nähe von Antennen gebracht werden muss, zum Beispiel durch Ablegen des Mobiltelefons an einem bestimmten Platz im Fahrzeug vor dem Motorstart oder durch Halten des Mobiltelefons in den Nachbereich einer Antenne zum Beispiel im Türgriff. Andere Lösungen bilden einen Funkfernbedienschlüssel nach und erfordern eine oder mehrere Bedienhandlungen am Telefon oder einer Smart Watch wie zum Beispiel Display aktivieren, PIN eingeben, App starten und Button "Fahrzeug entriegeln" drücken.

Beide Lösungsvarianten erfordern, dass das Mobiltelefon in die Hand genommen werden muss und bestimmte Bedienhandlungen erfolgen müssen. Bei klassischen passiven Zugangssystemen, auch Passive Entry oder Keyless Entry genannt, muss der Fahrzeugschlüssel nicht in die Hand genommen werden und kann zum Beispiel in der Jackentasche verbleiben.

Hinsichtlich der Sicherheit ist keine vollständige Absicherung von Mobilgeräten gegen Relais-Angriffe bekannt, da Funkkommunikationsstrecken generell verlängerbar sind. Zum Beispiel bei der Nutzung von NFC Nahfeldkommunikation in Verbindung mit Mobiltelefonen für einen Fahrzeugzugang werden Relais-Angriffe dadurch erschwert, dass die Kommunikationsreichweite normalerweise auf wenige Zentimeter begrenzt ist. Durch geeignete technische Einrichtungen kann mit entsprechend hohem Aufwand wie Verstärker und Spezialantennen jedoch trotzdem ein RSA Angriff auch aus größerer Entfernung erfolgen.

WO 2013/050409 A1 offenbart ein Verfahren, dass sich wie oben beschrieben, auf die geringe Reichweite der Funkverbindung verlässt.

DE 10 2013 015 478 A1 offenbart ein Verfahren zur Verhinderung von Relay-Angriffen zwischen einem mobilen Kommunikationsgerät und einem Kraftfahrzeug, wobei beide mindestens eine Einrichtung zum Empfang und zur Verarbeitung mindestens eines Positionssignals verwenden, um die eigene Position ermitteln zu können, die dann abgeglichen werden, um einen entfernten Relay-Angriff zu erkennen.

DE 10 2009 014 975 A1 offenbart ein Verfahren zum Fernsteuern eines Fahrzeugzugangs und/oder Fahrzeugstarts mit einem in einem Fahrzeug befindlichen quasistationären Steuergerät und einem mobilen Transponder. Zwischen dem Steuergerät und dem Transponder wird über eine Funkverbindung in zumindest eine Richtung ein Funksignal und über eine Ultraschallverbindung in zumindest eine Richtung ein Ultraschallsignal übertragen. In dem Verfahren erfolgt eine Prüfung der Berechtigung zum Fahrzeugzugang und/oder Fahrzeugstart anhand kodierter Kommunikation über die Funkverbindung und anhand des Ultraschallsignals.

DE 44 09 167 C1 offenbart eine Einrichtung zur Kontrolle des schlüssellosen Zuganges zu einem Kraftfahrzeug mit einer im Kraftfahrzeug angeordneten Sendeeinheit, mit einem von einem Benutzer mitgeführten Transceiver und mit einer Abstandsdetektiereinrichtung, die den Abstand zwischen dem Transceiver und dem Kraftfahrzeug misst.

DE 10 2005 058 041 A1 offenbart ein Verfahren zum Betreiben eines Zugangssicherungssystems. Das Zugangssicherungssystem weist eine Objektstation mit einer ersten Sende- und Empfangseinheit und eine von einem befugten Benutzer mitführbare Mobilstation mit einer zweiten Sende- und Empfangseinheit auf. Zudem sind die Objektstation und die Mobilstation zum Austausch von Signalen zur Feststellung einer Zugangsberechtigung eingerichtet.

Das Dokument EP 2 806 406 A2 beschreibt ein Zugangssicherungssystem, das eine Zugangserlaubnis von einem Vergleich von Bewegungshistorien abhängig macht. Dabei können Bewegungshistorien eines Autoschlüssels verwendet werden, die vom Schlüssel selbst und vom Fahrzeug aus gemessen werden. Die Druckschrift WO 00/12848 beschreibt ein Verfahren einer schlüssellosen Zugangskontrolle. Das Dokument US 2014/0330449 A1 beschreibt ein Sicherheitssystem für ein Fahrzeug.

Der Erfindung liegt nun die Aufgabe zugrunde, sowohl den Komfort als auch die Sicherheit einer passiven Zugangskontrolle mit einem als Schlüssel dienenden Mobilgerät zu erhöhen.

Diese Aufgabe wird gelöst durch ein Verfahren gemäß Anspruch 1 beziehungsweise ein passives Zugangssystem gemäß Anspruch 6.

Das erfindungsgemäße Verfahren zur passiven Zugangskontrolle mit einem als Schlüssel dienenden Mobilgerät und einer Interaktionseinheit, wobei das Mobilgerät und die Interaktionseinheit jeweils mindestens eine Datenkommunikationseinrichtung eingerichtet zum Austausch von Berechtigungsinformationen aufweisen, umfasst die Schritte:
- Durchführen einer elektronischen Abstandsmessung zwischen dem Mobilgerät und der Interaktionseinheit;
- Erlauben eines Zugangs und/oder einer Interaktion nur dann, wenn der Abstand des Mobilgeräts zu der Interaktionseinheit innerhalb eines erlaubten Abstands liegt, wobei das Mobilgerät und die Interaktionseinheit jeweils den Abstand messen und wobei ein Zugang und/oder eine Interaktion nur dann erlaubt wird, wenn eine Abweichung der beiden gemessenen Abstände Null oder kleiner als ein vorgegebener Grenzwert ist.

Dabei werden die erlaubten Abstände und Toleranzen für den komfortablen passiven Motorstart und Zugang ohne Interaktion am Mobilgerät durch gesetzliche Anforderungen vorgegeben, zum Beispiel muss sich das für den Motorstart berechtigende Mobilgerät beim Motorstart innerhalb der Fahrzeugaußenhülle befinden, das zutrittsberechtigende Mobilgerät darf beim Entriegeln des Fahrzeugs nicht weiter als zwei Meter von der Fahrzugaußenhülle entfernt sein. Diese erlaubten Abstände können nun auch zu der Bewertung herangezogen, ob ein Relay Angriff vorliegt oder nicht. Es können aber auch andere, für die Abwehr von Relay Attacken ausreichende Abstandsgrenzwerte zu Bewertung herangezogen werden, die größere Abstände zulassen. Die Abwehr von Relay Angriffen beruht darauf, dass die elektronische Abstandsmesseinrichtung so gestaltet ist, dass keine Manipulation der Abstandsmessung möglich ist. Das wird dadurch sichergestellt, dass erstens die Abstandsmessung auf einer Signallaufzeitmessung beruht und zweites sichergestellt wird, dass die Abstandsmessung zwischen dem als Fahrzeugschlüssel genutzten Mobilgerät und der Interaktionseinheit erfolgt. Insbesondere wenn die gesetzlichen Anforderungen bezüglich der erlaubten Abstände für einen passiven Motorstart und einen Zugang nicht durch die zur Abwehr von Relay Attacken verwendete Abstandsmesseinrichtung hinreichend genau zu ermitteln sind, können für die Abstandsmessung für einen passiven Motorstart und einen Zugang beziehungsweise für die Abstandmessung zur Abwehr von Relay Attacken unterschiedliche Messeinrichtungen und/oder Messverfahren zu Anwendung kommen

Als Mobilgerät werden hier insbesondere Smartphones, aber auch Smart Watches, Wearables, Tablets, Smart Cards, Token und ähnliches angesehen, die geeignet sind, das Verfahren zur passiven Zugangskontrolle, zumindest denjenigen Teil des Mobilgeräts auszuführen. Eine sicherheitsrelevante Interaktionseinheit kann zum Beispiel ein Fahrzeug oder ein Bestandteil eines Fahrzeuges wie zum Beispiel ein Fahrzeugtürgriff, eine Motorstartvorrichtung aber auch ein drahtloses Bezahlterminal oder ein Zugangssystem zum Beispiel zu einem Gebäude oder einem Raum sein. Die Berechtigungsinformationen beziehungsweise deren Austausch kann ein komplexeres Authentisierungsverfahren umfassen oder auch den Austausch eines Codes. Es wird hier eine elektronische Abstandsmessung vorgeschlagen, da diese im Gegensatz zu einer optischen Messung auch Materialien von Bekleidung oder Taschen durchdringen kann, wodurch die Bedienung vereinfacht wird.

Das erfindungsgemäße Verfahren hat den Vorteil, dass auch mit Mobilgeräten ein sicherer und zugleich komfortabler Zugang erreicht werden kann. Durch eine verlässliche elektronische Abstandsmessung wird festgestellt, ob sich das Mobilgerät innerhalb eines erlaubten Abstandes befindet, bevor ein Zugang oder eine Interaktion, wie ein funktionaler Zugriff oder das Ausführen einer Authentisierung, ausgeführt werden darf. Der erlaubte Abstand kann der direkte Abstand zu einer elektronischen Abstandsmesseinrichtung oder einer Außenfläche der Interaktionseinheit, wie einer Außenhülle eines Fahrzeugs oder einer Tür, sein. Dieser Abstand kann im Bereich von wenigen Metern, wie zum Beispiel zwei Metern, bis zu einigen Zentimetern, wie zum Beispiel zehn Zentimetern, liegen.

Erfindungsgemäß ist vorgesehen, dass das Mobilgerät und die Interaktionseinheit jeweils den Abstand messen und dass ein Zugang und/oder eine Interaktion nur dann erlaubt wird, wenn eine Abweichung der beiden gemessenen Abstände Null oder kleiner als ein vorgegebener Grenzwert ist. Durch diese Kommunikation kann die Identität zwischen dem Sendegegenstand und dem gemessenen oder detektierten Gegenstand, hier jeweils des Mobilgeräts (aus Sicht der Interaktionseinheit), sichergestellt werden. Dadurch kann ein Relay-Angriff ausgeschlossen werden. Durch die elektronische Abstandsmesseinrichtung, die den wahren Abstand zwischen Mobilgerät und einer sicherheitsrelevanten Interaktionseinheit misst, wird sichergestellt, dass sich das Mobilgerät wirklich in der Nähe der sicherheitsrelevanten Interaktionseinheit befindet. Das Messergebnis wird dazu verwendet, zu bewerten, ob sich das Mobilgerät in der Nähe der sicherheitsrelevanten Interaktionseinheit befindet. Damit werden Relay-Angriffe wirksam erkannt und abgewehrt, so wird zum Beispiel die Ausführung von sicherheitsrelevanten Applikation verhindert.

Es kann weitervorgesehen sein, dass das Mobilgerät den gemessenen Abstand an die Interaktionseinheit überträgt und dass die Abweichung von der Interaktionseinheit ermittelt wird. Die Abweichung kann alternativ von anderen Elementen, wie zum Beispiel einem Backend, das mit der Interaktionseinheit wie zum Beispiel einem Fahrzeug in Verbindung steht, ermittelt und/oder verarbeitet werden. Die Verarbeitung in der Interaktionseinheit hat den Vorteil, dass diese direkt in der Einheit geschieht, zu der Zugang gewünscht wird, so dass keine weiteren Datenübertragungen notwendig sind. Dadurch können die Sicherheit und die Geschwindigkeit der Verarbeitung erhöht werden.

Die elektronische Abstandsmessung basiert auf einer Laufzeitmessung eines Funksignals. Eine Laufzeitmessung, auch Time of Flight (ToF) genannt, kann reflektiv, ähnlich zum Beispiel zu einem Radar, durchgeführt werden oder über Signale, zum Beispiel mit einem Zeitstempel, realisiert werden.

Es kann vorgesehen sein, dass zwischen dem Mobilgerät und der Interaktionseinheit ein Authentisierungsverfahren durchgeführt wird und dass ein Zugang und/oder eine Interaktion nur bei erfolgreicher Authentisierung erlaubt wird. Es können klassische Challenge-Response-Verfahren zum Einsatz gelangen. Es kann freigestellt sein, ob in einer Kette von Berechtigungsprüfungen das Authentisierungsverfahren oder die elektronische Abstandsmessung beziehungsweise deren Auswertung zuerst durchgeführt wird.

Es kann weiter vorgesehen sein, dass ein Datenaustausch und/oder ein Authentisierungsverfahren zwischen dem Mobilgerät und der Interaktionseinheit über einen Dienst und/oder eine Verbindung der elektronischen Abstandsmessung durchgeführt werden. Diese Verbindung kann zusätzlich zu der Datenkommunikationseinrichtung zum Austausch von Berechtigungsinformationen ausgestaltet sein oder sie kann die Aufgaben der Datenkommunikationseinrichtung vollständig übernehmen. In letzterem Fall ist eine Datenkommunikationseinrichtung in der elektronischen Abstandsmessung integriert, so dass eine eigenständige Datenkommunikationseinrichtung entfallen kann, was Kosten und Komplexität senkt.

Es kann ferner vorgesehen sein, dass die elektronische Abstandsmessung ausgeführt wird, wenn eine Kontaktinformation detektiert wird. Diese Kontaktinformation kann von einem Sensor, wie einem Näherungssensor oder einem Kontaktsensor an einem Türgriff, oder durch das Erkennen eines Kommunikationspartners einer Funkverbindung, zum Beispiel durch ein periodisches Sendesignal, realisiert werden. Derartige Methoden können den Energieverbrauch verringern, da wesentliche Teile ausgeschaltet bleiben können, bis sie tatsächlich benötigt werden.

Das erfindungsgemäße passive Zugangssystem mit einem als Schlüssel dienenden Mobilgerät und einer Interaktionseinheit, wobei das Mobilgerät und die Interaktionseinheit jeweils mindestens eine Datenkommunikationseinrichtung eingerichtet zum Austausch von Berechtigungsinformationen aufweisen, sieht vor, dass das Mobilgerät und die Interaktionseinheit jeweils eine elektronische Abstandsmesseinrichtung eingerichtet zur Bestimmung des Abstandes zwischen dem Mobilgerät und der Interaktionseinheit aufweisen und dass das Mobilgerät und/oder die Interaktionseinheit eingerichtet sind, einen Zugang und/oder eine Interaktion nur dann zu erlauben, wenn der Abstand des Mobilgeräts zu der Interaktionseinheit innerhalb eines erlaubten Abstands liegt. Es gelten die gleichen Vorteile und Modifikationen wie zuvor beschrieben.

Das Mobilgerät und/oder die Interaktionseinheit sind eingerichtet, einen Zugang und/oder eine Interaktion nur dann zu erlauben, wenn eine Abweichung der beiden gemessenen Abstände Null oder kleiner als ein vorgegebener Grenzwert ist. Durch diese Kommunikation kann die Identität zwischen dem Sendegegenstand und dem gemessenen oder detektierten Gegenstand, hier jeweils des Mobilgeräts (aus Sicht der Interaktionseinheit), sichergestellt werden. Dadurch kann ein Relay-Angriff ausgeschlossen werden.

Die Datenkommunikationseinrichtungen können eingerichtet sein, Berechtigungsinformationen im Rahmen eines Authentisierungsverfahren auszutauschen, und ein Zugang und/oder eine Interaktion können nur bei erfolgreicher Authentisierung erlaubt sein. Es können klassische Challenge-Response-Verfahren zum Einsatz gelangen. Es kann freigestellt sein, ob in einer Kette von Berechtigungsprüfungen das Authentisierungsverfahren oder die elektronische Abstandsmessung beziehungsweise deren Auswertung zuerst durchgeführt wird.

Die Abstandsmesseinrichtungen können hochfrequente Sender und/oder Empfänger aufweisen. Hochfrequente Signale beginnen ab einer Frequenz von etwa 1 GHz. Frequenzbereiche oder -bänder in den Bereichen von zum Beispiel 2,4 GHz, 4 oder 5 Ghz oder höher können gut verwendet werden, da sie flankensteile, kurze Signale oder Impulse für die Zeitmessung bieten.

Es kann vorgesehen sein, dass die Abstandsmesseinrichtung nachträglich am als Fahrzeugschlüssel genutzten Mobilgerät anbringbar ist oder angebracht wurde oder bereits bei einer Herstellung des Mobilgerätes in diesem integriert wurde. Durch die nachträgliche Anbringung können auch bereits bestehende Mobilgeräte mit der elektronischen Abstandsmesseinrichtung ausgerüstet werden, so dass auch bereits bestehende Mobilgeräte gegen Relais Angriffe gesichert werden können. Ebenso ist es möglich, bereits bei der Herstellung eines Mobilgeräts die Abstandsmesseinrichtung zu verbauen, was eine gute Integration in das Mobilgerät erlaubt.

Die Abstandsmesseinrichtungen können eingerichtet sein, reflektierte Signale zu erkennen und diese nicht bei einer Berechnung des Abstands zu verwenden. Reflektierte Signale können direkt empfangene Signale überlagern und verzerren, wodurch Messungen verfälscht werden können. Zum Beispiel durch Unterdrückung oder Filterung von Reflektionen kann die Genauigkeit der Abstandsmessung verbessern.

Das vorgeschlagene passive Zugangssystem bietet sich insbesondere für Fahrzeuge an, da zugleich eine hohe Sicherheitsrelevanz und ein Wunsch nach Komfort gegeben sind.

Es kann vorgesehen sein, dass mehrere elektronische Abstandsmesseinrichtungen im Fahrzeug vorgesehen sind und/oder dass die Abstandsmesseinrichtungen nachträglich am Fahrzeug anbringbar sind oder angebracht wurden oder bereits bei der Herstellung des Fahrzeugs in diesem integriert wurden. Die Abstandsmesseinrichtungen können in oder an dem Fahrzeug angebracht sein, vorzugsweise mit nebeneinander angeordneten oder sich teilweise überdeckenden Abstrahl- und/oder Empfangsbereichen, um so eine lückenlose Zugangsmöglichkeit aus allen Richtungen mit guter Empfangscharakteristik zu bieten. Durch die nachträgliche Anbringung können auch bereits bestehende Fahrzeuge mit der elektronischen Abstandsmesseinrichtung ausgerüstet werden, so dass auch bestehende Fahrzeuge gegen Relais Angriffe gesichert werden können. Ebenso ist es möglich, bereits bei der Herstellung eines Fahrzeugs die Abstandsmesseinrichtung oder die Abstandsmesseinrichtungen zu verbauen, was eine gute Integration in die Fahrzeugsysteme erlaubt.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnung erläutert. Es zeigt:

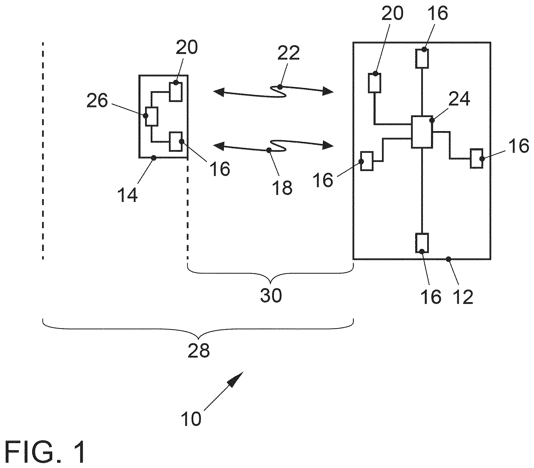

- Figur 1: eine schematische Darstellung eines passiven Zugangssystems.

Figur 1 zeigt ein passives Zugangssystem 10 mit einem als Interaktionseinheit agierenden Fahrzeug 12 und einem Mobilgerät 14. Gezeigt ist eine schematische Darstellung eines Fahrzeugs 12, hier in Form eines PKWs. Als Fahrzeuge werden weiterhin Landfahrzeuge, wie zum Beispiel LKWs, Busse, Motorräder, Schienenfahrzeuge sowie Luft- und Wasserfahrzeuge angesehen. Als Interaktionseinheit ist hier beispielhaft das Fahrzeug 12 dargestellt. Eine Interaktionseinheit kann zum Beispiel auch ein drahtloses Bezahlterminal oder ein Zugangssystem zum Beispiel zu einem Gebäude oder einem Raum sein.

Das Mobilgerät 14 kann ein Smartphone oder ähnliches sein, das als elektronischer Schüssel für den Zugang, die Aktivierung einer Funktion oder den Start des Fahrzeugs 12 dient.

Zunächst werden die einzelnen Komponenten des passiven Zugangssystems 10 beziehungsweise des Fahrzeugs 12 und des Mobilgeräts 14 beschrieben. Das Verfahren zur passiven Zugangskontrolle wird im Anschluss beschrieben.

Das Fahrzeug 12 hat mehrere elektronische Abstandsmesseinrichtungen 16, von denen hier beispielhaft vier gezeigt sind. Vorzugsweise sind die elektronischen Abstandsmesseinrichtungen 16 über den Umfang des Fahrzeugs 12 verteilt, um eine gute Zugänglichkeit zu erreichen. Das Mobilgerät 14 hat ebenfalls eine elektronische Abstandsmesseinrichtung 16. Wegen der kleinen Abmessungen des Mobilgeräts 14 ist eine elektronische Abstandsmesseinrichtung 16 ausreichend.

Anhand der elektronischen Abstandsmesseinrichtungen 16 in dem Fahrzeug 12 und dem Mobilgerät 14 findet eine elektronische Abstandsmessung 18 statt, mit welcher der genaue Abstand des Mobilgeräts 14 von dem Fahrzeug 12 ermittelt werden kann. Die elektronische Abstandsmessung 18 basiert auf einer Laufzeitmessung eines Funksignals, als Träger wird zum Beispiel eine UWB (Ultra Wide Band) Funktechnologie oder eine andere hochfrequente Technologie wie zum Beispiel WLAN verwendet.

Des Weiteren ist in dem Mobilgerät 14 und in dem Fahrzeug 12 jeweils eine Datenkommunikationseinrichtung 20 zur Durchführung eines Authentisierungsverfahren 22 vorgesehen. Diese Datenkommunikationseinrichtungen 20 sind optional, da auch dieser und auch weitere Funkverkehre über einen Dienst oder Träger der elektronischen Abstandsmesseinrichtungen 16 durchgeführt werden können.

In dem Fahrzeug 12 ist ein Steuergerät 24 oder eine Recheneinheit vorhanden, welche mit den Einrichtungen 16 und 20 verbunden ist, um die Kommunikation zu steuern und das nachfolgend beschriebene Verfahren zur passiven Zugangskontrolle zumindest teilweise durchzuführen. Das Steuergerät 24 kann zum Beispiel Bestandteil einer Kommunikationseinheit oder ein Kommunikationssteuergerät sein. In dem Mobilgerät 14 ist ebenfalls eine Recheneinheit 26, zum Beispiel in Form eines Prozessors, auch innerhalb eines Ein-Chip-Systems (System-on-a-Chip, SoC). Die Recheneinheit 26 ist mit den Einrichtungen 16 und 20 verbunden, um die Kommunikation zu steuern und das nachfolgend beschriebene Verfahren zur passiven Zugangskontrolle zumindest teilweise durchzuführen.

Im Folgenden wird das Verfahren zur passiven Zugangskontrolle beschrieben, mit dem der tatsächliche Ort beziehungsweise der tatsächliche Abstand des elektronischen Schlüssels in Form des Mobilgeräts 14 festgestellt werden kann. Genauer gesagt kann tatsächliche Ort beziehungsweise der tatsächliche Abstand des Senders des gesendeten Signals über die elektronische Abstandsmessung 18 festgestellt werden.

Es wird ein erlaubter Abstand 28 zu dem Fahrzeug 12 festgelegt, beispielsweise zwei Meter. Der erlaubte Abstand 28 kann auf einzelne elektronische Abstandsmesseinrichtungen 16 bezogen sein oder die Außenhülle des Fahrzeugs 12 nachbilden. Zunächst befindet ein sich an das Fahrzeug 12 annäherndes Mobilgerät 14 außerhalb des erlaubten Abstands 28, so dass ein Zugang oder eine Interaktion zwischen dem Mobilgerät 14 und dem Fahrzeug 12 noch nicht erlaubt ist. Es kann aber bereits eine Kontaktaufnahme, zum Beispiel über ausgesendete Beacon-Signale, stattfinden, so dass die beiden Teilnehmer voneinander Kenntnis haben.

Wenn sich nun das Mobilgerät 14 innerhalb des erlaubten Abstands 28 befindet, wie in Figur 1 dargestellt, kann die elektromische Abstandsmessung 18 erfolgen. Dazu misst zumindest eine elektronische Abstandsmesseinrichtung 16 aus dem Fahrzeug 12 oder dem Mobilgerät 14 den Abstand 30 und sendet ihn an das Steuergerät 24 zur Auswertung und weiteren Verarbeitung. Entsprechend wird ein Zugang und/oder eine Interaktion nur dann erlaubt, wenn der Abstand 30 des Mobilgeräts14 zu der Interaktionseinheit hier in Form des Fahrzeugs 12 innerhalb des erlaubten Abstands 28 liegt.

Die Sicherheit wird noch weiter gesteigert, indem das Mobilgerät 14 und das Fahrzeug 12 jeweils den Abstand messen und die beiden gemessenen Abstände verglichen werden. Nur wenn eine Abweichung der beiden gemessenen Abstände Null oder kleiner als ein vorgegebener Grenzwert ist, wird ein Zugang und/oder eine Interaktion erlaubt. Konkret überträgt das Mobilgerät 14 seinen gemessenen Abstand an das Fahrzeug 12, wo in dem Steuergerät 24 die beiden Abstände verglichen werden. Der vorgegebene Grenzwert sollte Messungenauigkeiten der Laufzeitmessung überschreiten, ansonsten hängt die Wahl von dem jeweiligen Einsatz ab, zum Beispiel von der Länge des erlaubten Abstands 28, und/oder von dem geforderten Sicherheitsprofil.

Nachdem nun der tatsächliche Abstand 30 zwischen dem Mobilgerät 14 und dem Fahrzeug 12 als innerhalb des erlaubten Abstands 28 liegend bestätigt ist, wird ein Authentisierungsverfahren 22 durchgeführt. Hier in diesem Beispiel wird diese Abfolge gewählt, es ist möglich, zuerst das Authentisierungsverfahren 22 und dann die elektromische Abstandsmessung 18 durchzuführen. Das Authentisierungsverfahren 22, zum Beispiel ein Challenge-Response-Verfahren, stellt sicher, dass das Mobilgerät 14 über die benötigten Berechtigungen für das Fahrzeug 12 verfügt. Das Authentisierungsverfahren 22 kann entweder über die elektronischen Abstandsmesseinrichtungen 16 oder über die Datenkommunikationseinrichtungen 20 durchgeführt werden. Bei erfolgreicher Authentisierung kann ein Zugang und/oder eine Interaktion erfolgen.

Wenn entweder die elektronische Abstandsmesseinrichtung 16 oder das Authentisierungsverfahren 22 nicht erfolgreich abgeschlossen wurden, kann dies bedeuten, dass ein Relais-Angriff vorliegt oder dass ein Nichtberechtigter sich Zugang zu dem Fahrzeug 12 verschaffen will. In diesen Fällen wird das Zugangsverfahren abgebrochen. Es können Maßnahmen ergriffen werden, wie das Absenden einer Warnnachricht an den Fahrzeuginhaber oder einen Dienst, die Aufzeichnung des Angriffes mit einer Fahrzeugkamera, das Aktivieren von Licht und/oder Hupe oder Ähnliches.

Das erfindungsgemäße Verfahren hat den Vorteil, dass auch mit Mobilgeräten ein sicherer und zugleich komfortabler Zugang erreicht werden kann.

### Bezugszeichenliste

- 10: passives Zugangssystem
- 12: Fahrzeug
- 14: Mobilgerät
- 16: elektronische Abstandsmesseinrichtung
- 18: elektronische Abstandsmessung
- 20: Datenkommunikationseinrichtung
- 22: Authentisierungsverfahren
- 24: Steuergerät
- 26: Recheneinheit
- 28: Abstand
- 30: erlaubter Abstand

## Patentansprüche

1. Verfahren zur passiven Zugangskontrolle mit einem als Schlüssel dienenden Mobilgerät (14) und einer Interaktionseinheit, wobei das Mobilgerät (14) und die Interaktionseinheit (12) jeweils mindestens eine Datenkommunikationseinrichtung (20) zum Austausch von Berechtigungsinformationen aufweisen, mit den Schritten:
- Durchführen einer elektronischen Abstandsmessung (18) zwischen dem Mobilgerät (14) und der Interaktionseinheit (12), wobei die elektronische Abstandsmessung (18) auf einer Laufzeitmessung eines Funksignals basiert; und
- Erlauben eines Zugangs und/oder einer Interaktion nur dann, wenn der Abstand (30) des Mobilgeräts (14) zu der Interaktionseinheit (12) innerhalb eines erlaubten Abstands (28) liegt, wobei das Mobilgerät (14) und die Interaktionseinheit (12) jeweils den Abstand (30) messen und wobei ein Zugang und/oder eine Interaktion nur dann erlaubt wird, wenn eine Abweichung der beiden gemessenen Abstände (30) Null oder kleiner als ein vorgegebener Grenzwert ist.

2. Verfahren nach Anspruch 1, **dadurch gekennzeichnet, dass** das Mobilgerät (14) den gemessenen Abstand (30) an die Interaktionseinheit (12) überträgt und dass die Abweichung von der Interaktionseinheit (12) ermittelt wird.

3. Verfahren nach einem der vorhergehenden Ansprüche, **dadurch gekennzeichnet, dass** zwischen dem Mobilgerät (14) und der Interaktionseinheit (12) ein Authentisierungsverfahren (22) durchgeführt wird und dass ein Zugang und/oder eine Interaktion nur bei erfolgreicher Authentisierung erlaubt wird.

4. Verfahren nach einem der vorhergehenden Ansprüche, **dadurch gekennzeichnet, dass** ein Datenaustausch und/oder ein Authentisierungsverfahren zwischen dem Mobilgerät (14) und der Interaktionseinheit (12) über einen Dienst und/oder eine Verbindung der elektronischen Abstandsmessung (18) durchgeführt werden.

5. Verfahren nach einem der vorhergehenden Ansprüche, **dadurch gekennzeichnet, dass** die elektronische Abstandsmessung (18) ausgeführt wird, wenn eine Kontaktinformation detektiert wird.

6. Passives Zugangssystem mit einem als Schlüssel dienenden Mobilgerät (14) und einer Interaktionseinheit (12), wobei das Mobilgerät (14) und die Interaktionseinheit (12) jeweils mindestens eine Datenkommunikationseinrichtung (20) eingerichtet zum Austausch von Berechtigungsinformationen aufweisen, wobei das Mobilgerät (14) und die Interaktionseinheit (12) jeweils eine elektronische Abstandsmesseinrichtung (16) eingerichtet zur Bestimmung des Abstandes (30) zwischen dem Mobilgerät (14) und der Interaktionseinheit (12) aufweisen und wobei das Mobilgerät (14) und/oder die Interaktionseinheit (12) eingerichtet sind, einen Zugang und/oder eine Interaktion nur dann zu erlauben, wenn der Abstand (30) des Mobilgeräts (14) zu der Interaktionseinheit (12) innerhalb eines erlaubten Abstands (28) liegt, wobei das Mobilgerät (14) und die Interaktionseinheit (12) jeweils eingerichtet sind, den Abstand (30) zu messen, wobei das Mobilgerät (14) und/oder die Interaktionseinheit (12) eingerichtet sind, einen Zugang und/oder eine Interaktion nur dann zu erlauben, wenn eine Abweichung der beiden gemessenen Abstände (30) Null oder kleiner als ein vorgegebener Grenzwert ist, und wobei die elektronische Abstandsmessung (18) auf einer Laufzeitmessung eines Funksignals basiert.

7. Passives Zugangssystem nach Anspruch 6, **dadurch gekennzeichnet, dass** die Datenkommunikationseinrichtungen (20) eingerichtet sind, Berechtigungsinformationen im Rahmen eines Authentisierungsverfahren (22) auszutauschen, und dass ein Zugang und/oder eine Interaktion nur bei erfolgreicher Authentisierung erlaubt ist.

8. Passives Zugangssystem nach Anspruch 6 oder 7, **dadurch gekennzeichnet, dass** die Abstandsmesseinrichtungen (16) hochfrequente Sender und/oder Empfänger aufweisen.

9. Passives Zugangssystem nach einem der Ansprüche 6 bis 8, **dadurch gekennzeichnet, dass** die Abstandsmesseinrichtung (16) nachträglich am als Fahrzeugschlüssel genutzten Mobilgerät (14) anbringbar ist oder angebracht wurde oder bereits bei einer Herstellung des Mobilgerätes (14) in diesem integriert wurde.

10. Passives Zugangssystem nach einem der Ansprüche 6 bis 9, **dadurch gekennzeichnet, dass** die Abstandsmesseinrichtungen (16) eingerichtet sind, reflektierte Signale zu erkennen und diese nicht bei einer Berechnung des Abstands zu verwenden.

## Claims

1. Method for passive access control using a mobile device (14) used as a key and an interaction unit, wherein the mobile device (14) and the interaction unit (12) each have at least one data communication device (20) for interchanging authorization information, having the steps of:
- carrying out an electronic distance measurement (18) between the mobile device (14) and the interaction unit (12), wherein the electronic distance measurement (18) is based on a propagation time measurement of a radio signal; and
- allowing access and/or interaction only when the distance (30) between the mobile device (14) and the interaction unit (12) is within a permitted distance (28), wherein the mobile device (14) and the interaction unit (12) each measure the distance (30), and wherein access and/or interaction is/are allowed only when a difference between the two measured distances (30) is zero or less than a predefined limit value.

2. Method according to Claim 1, **characterized in that** the mobile device (14) transmits the measured distance (30) to the interaction unit (12), and **in that** the difference is determined by the interaction unit (12).

3. Method according to one of the preceding claims, **characterized in that** an authentication method (22) is carried out between the mobile device (14) and the interaction unit (12), and **in that** access and/or interaction is/are allowed only in the case of successful authentication.

4. Method according to one of the preceding claims, **characterized in that** data interchange and/or an authentication method is/are carried out between the mobile device (14) and the interaction unit (12) via a service and/or a connection of the electronic distance measurement (18).

5. Method according to one of the preceding claims, **characterized in that** the electronic distance measurement (18) is carried out if contact information is detected.

6. Passive access system having a mobile device (14) used as a key and an interaction unit (12), wherein the mobile device (14) and the interaction unit (12) each have at least one data communication device (20) configured to interchange authorization information, wherein the mobile device (14) and the interaction unit (12) each have an electronic distance measurement device (16) configured to determine the distance (30) between the mobile device (14) and the interaction unit (12), and wherein the mobile device (14) and/or the interaction unit (12) is/are configured to allow access and/or interaction only when the distance (30) between the mobile device (14) and the interaction unit (12) is within a permitted distance (28), wherein the mobile device (14) and the interaction unit (12) are each configured to measure the distance (30), wherein the mobile device (14) and/or the interaction unit (12) is/are configured to allow access and/or interaction only when a difference between the two measured distances (30) is zero or less than a predefined limit value, and wherein the electronic distance measurement (18) is based on a propagation time measurement of a radio signal.

7. Passive access system according to Claim 6, **characterized in that** the data communication devices (20) are configured to interchange authorization information as part of an authentication method (22), and **in that** access and/or interaction is/are allowed only in the case of successful authentication.

8. Passive access system according to Claim 6 or 7, **characterized in that** the distance measurement devices (16) have radio-frequency transmitters and/or receivers.

9. Passive access system according to one of Claims 6 to 8, **characterized in that** the distance measurement device (16) can be or has been subsequently fitted to the mobile device (14) used as the vehicle key or has been already integrated in the mobile device (14) during production of the latter.

10. Passive access system according to one of Claims 6 to 9, **characterized in that** the distance measurement devices (16) are configured to detect reflected signals and to not use them when calculating the distance.

## Revendications

1. Procédé de contrôle d'accès passif avec un appareil mobile (14) servant de clé et une unité d'interaction, l'appareil mobile (14) et l'unité d'interaction (12) possédant respectivement au moins un dispositif de communication de données (20) servant à l'échange d'informations d'autorisation, comprenant les étapes suivantes :
- réalisation d'une mesure de distance (18) électronique entre l'appareil mobile (14) et l'unité d'interaction (12), la mesure de distance (18) électronique se basant sur une mesure de temps de propagation d'un signal radioélectrique ; et
- permission d'un accès et/ou d'une interaction uniquement lorsque la distance (30) entre l'appareil mobile (14) et l'unité d'interaction (12) se trouve à l'intérieur d'une distance permise (28), l'appareil mobile (14) et l'unité d'interaction (12) mesurant respectivement la distance (30) et l'accès et/ou une interaction n'étant permis que lorsqu'un écart entre les deux distances (30) mesurées est nul ou inférieur à une valeur limite prédéfinie.

2. Procédé selon la revendication 1, **caractérisé en ce que** l'appareil mobile (14) transmet la distance (30) mesurée à l'unité d'interaction (12) et **en ce que** l'écart est déterminé par l'unité d'interaction (12).

3. Procédé selon l'une des revendications précédentes, **caractérisé en ce qu'**une procédure d'authentification (22) est effectuée entre l'appareil mobile (14) et l'unité d'interaction (12) et **en ce qu'**un accès et/ou une interaction ne sont permis que si l'authentification a réussi.

4. Procédé selon l'une des revendications précédentes, **caractérisé en ce qu'**un échange de données et/ou une procédure d'authentification sont effectués entre l'appareil mobile (14) et l'unité d'interaction (12) par le biais d'un service et/ou d'une liaison de la mesure de distance (18) électronique.

5. Procédé selon l'une des revendications précédentes, **caractérisé en ce que** la mesure de distance (18) électronique est exécutée lorsqu'une information de contact est détectée.

6. Système d'accès passif avec un appareil mobile (14) servant de clé et une unité d'interaction (12), l'appareil mobile (14) et l'unité d'interaction (12) possédant respectivement au moins un dispositif de communication de données (20) conçu pour l'échange d'informations d'autorisation, l'appareil mobile (14) et l'unité d'interaction (12) possédant respectivement un dispositif de mesure de distance (16) électronique destiné à déterminer la distance (30) entre l'appareil mobile (14) et l'unité d'interaction (12) et l'appareil mobile (14) et/ou l'unité d'interaction (12) étant conçus pour ne permettre un accès et/ou une interaction que lorsque la distance (30) entre l'appareil mobile (14) et l'unité d'interaction (12) se trouve à l'intérieur d'une distance permise (28), l'appareil mobile (14) et l'unité d'interaction (12) étant respectivement conçus pour mesurer la distance (30), l'appareil mobile (14) et l'unité d'interaction (12) étant conçus pour ne permettre un accès et/ou une interaction que lorsqu'un écart entre les deux distances (30) mesurées est nul ou inférieur à une valeur limite prédéfinie, et la mesure de distance (18) électronique se basant sur une mesure de temps de propagation d'un signal radioélectrique.

7. Système d'accès passif selon la revendication 6, **caractérisé en ce que** les dispositifs de communication de données (20) sont conçus pour échanger des informations d'autorisation dans le cadre d'une procédure d'authentification (22) et **en ce qu'**un accès et/ou une interaction ne sont permis que si l'authentification a réussi.

8. Système d'accès passif selon la revendication 6 ou 7, **caractérisé en ce que** les dispositifs de mesure de distance (16) possèdent des émetteurs et/ou récepteurs à haute fréquence.

9. Système d'accès passif selon l'une des revendications 6 à 8, **caractérisé en ce que** le dispositif de mesure de distance (16) peut être ou a été monté ultérieurement sur l'appareil mobile (14) utilisé comme clé de véhicule ou a déjà été intégré dans l'appareil mobile (14) lors d'une fabrication de celui-ci.

10. Système d'accès passif selon l'une des revendications 6 à 9, **caractérisé en ce que** les dispositifs de mesure de distance (16) sont conçus pour reconnaître les signaux réfléchis et ne pas les utiliser lors d'un calcul de la distance.
